# EUROPÄISCHE PATENTANMELDUNG

(11) **EP 3 199 413 A1**
(43) Veröffentlichungstag der Anmeldung: **02.08.2017**
(21) Anmeldenummer: 16152954.0
(22) Anmeldetag: 27.01.2016
(51) Int. Cl.: B60T 7/04

(54) **AKTUATORVORRICHTUNG**

(71) Anmelder: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(57) **Zusammenfassung**

Eine Aktuatorvorrichtung (2) zur Betätigung wenigstens eines Fußpedals (P) eines Kraftfahrzeugs weist wenigstens ein Betätigungselement (8) auf, das zur Beaufschlagung des Fußpedals (P) mittels eines Stellmechanismus (10) zwischen einer Beaufschlagungsstellung und einer Freigabestellung verlagerbar ist. Dabei ist vorgesehen, dass der Stellmechanismus (10) mittels einer Schwungmasse mit einer Stellkraft (SF) antreibbar ist.

## Beschreibung

Die Erfindung betrifft eine Aktuatorvorrichtung zur Betätigung wenigstens eines Fußpedals eines Kraftfahrzeugs, wie eines Brems-, Gas- oder Kupplungspedals, nach dem Oberbegriff des Anspruchs 1. Die Aktuatorvorrichtung weist wenigstens ein Betätigungselement auf, das mittels eines Stellmechanismus zwischen einer Beaufschlagungsstellung, in der das betreffende Fußpedal gedrückt ist, und einer Freigabestellung verlagerbar ist, in der das betreffende Fußpedal frei gegeben ist und somit eine Ausgangsstellung einnimmt.

Aus EP 2431241 A1 ist eine Aktuatorvorrichtung bekannt, die ein Betätigungselement zur Beaufschlagung eines Fußpedals aufweist. Ferner ist eine Notausvorrichtung vorgesehen, mittels der das Fußpedal in eine Notausstellung verbracht werden kann. Hierzu weist die Notausvorrichtung eine Gasfeder auf, mittels der das Betätigungselement in Richtung Notausstellung mit einer Kraft beaufschlagbar ist.

Durch eine derartige Notausvorrichtung kann das Betätigungselement beispielsweise in die Notausstellung verbracht werden, wenn eine Versorgungsenergie der Aktuatorvorrichtung abfällt oder vollständig ausfällt. In Abhängigkeit von der Art des betreffenden Fußpedals kann die Notausstellung dabei, wie beispielsweise bei einem Brems- oder Kupplungspedal durch die jeweilige Beaufschlagungsstellung, oder wie im Falle eines Gaspedals durch die Freigabestellung gebildet sein. Um hierbei eine sichere Verlagerung des Fußpedals in die jeweilige Notausstellung gewährleisten zu können, muss die Gasfeder in jedem Fall ausreichend groß dimensioniert werden, wodurch für die Notausvorrichtung und die Aktuatorvorrichtung insgesamt ein relativ großer Bauraum zur Verfügung gestellt werden muss.

Die Aufgabe der Erfindung ist es, bei einer gattungsgemäßen Aktuatorvorrichtung eine kompaktere Bauweise zu ermöglichen.

Diese Aufgabe wird durch eine Aktuatorvorrichtung mit den Merkmalen des Anspruchs 1 gelöst. Dabei kann der Stellmechanismus durch eine Schwungmasse mit einer Stellkraft beaufschlagt werden, um diesen anzutreiben und das Betätigungselement zu verlagern. Hierdurch kann das Betätigungselement mittels der Schwungmasse, die entweder allein als regulärer Antrieb oder zusätzlich zu einem üblichen Antrieb als Notstellantrieb fungiert, zwischen der Beaufschlagungsstellung und der Freigabestellung verlagert werden. Auf diese Weise ist eine relativ kompakte Konstruktion der Aktuatorvorrichtung insgesamt auch bei Bereitstellung einer Notausfunktion möglich.

In einer besonders vorteilhaften Ausführungsform ist die Schwungmasse dabei durch ein Schwungrad gebildet, das um eine Achse herum angetrieben werden kann. Hierdurch kann sowohl der Bauraum, der für die Schwungmasse benötigt wird, als auch die Energiezufuhr, die zur Erhaltung einer permanenten Bewegung der Schwungmasse benötigt wird, besonders gering gehalten werden.

Dabei ist es günstig, wenn das Schwungrad einen Rotor bildet oder aufweist, der durch einen innenliegenden Stator angetrieben werden kann. Hierdurch ist ein einfacher permanenter Antrieb der Schwungmasse während des Betriebs der Aktuatorvorrichtung möglich, für den lediglich eine minimale Menge an elektrischer Energie zur Verfügung gestellt werden muss.

Vorteilhafterweise kann das Schwungrad über ein Zahnradgetriebe mit einem Übertragungselement gekoppelt werden, über das die Bewegungsenergie des Schwungrades impulsartig auf den Stellmechanismus übertragen werden kann. Hierdurch wird eine sehr direkte Kraft- bzw. Momentübertragung vom Schwungrad auf das Übertragungselement und von diesem über den Stellmechanismus auf das Betätigungselement ermöglicht.

Dabei ist es günstig, wenn das Zahnradgetriebe durch ein Planetengetriebe mit mehreren Planetenrädern gebildet ist, die innenseitig mit dem Schwungrad und außenseitig mit dem Übertragungselement kämmen. Durch ein derartiges Planetengetriebe kann eine stabile Übertragung von Kräften bzw. Momenten vom Schwungrad auf das Übertragungselement gewährleistet werden.

Vorteilhafterweise sind die Planetenräder dabei an einem verdrehbaren Planetenträger gehalten, der mittels einer Blockiereinrichtung entlang einer Drehrichtung blockiert werden kann. Durch ein solches ruckartiges Anhalten der Drehbewegung des Planetenträgers durch Aktivierung der Blockiereinrichtung kann die impulsartige Kraftübertragung vom Schwungrad über die Planetenräder auf das Übertragungselement in zuverlässiger Weise ausgelöst werden.

Ferner ist es günstig, wenn eine Freilaufeinrichtung vorgesehen ist, mittels der das Übertragungselement entgegen einer Beaufschlagungsrichtung blockiert werden kann, entlang der die impulsartige Kraftübertragung vom Schwungrad erfolgt. Auf diese Weise kann das Übertragungselement, sowie über dieses auch der Stellmechanismus und das Betätigungselement, nach der impulsartigen Kraftbeaufschlagung durch die Schwungmasse mittels der Freüaufeinrichtung in der jeweiligen impulsartig eingenommenen Stellung gehalten werden, wie insbesondere im Falle eines Brems- oder Kupplungspedals in der Beaufschlagungsstellung oder im Falle eines Gaspedals in der Freigabestellung.

Vorteilhafter Weise kann die Blockiereinrichtung hierbei gemeinsam mit der Freilaufeinrichtung betätigt werden, um eine Fixierung des Betätigungselementes unmittelbar nach dessen Beaufschlagung gewährleisten zu können.

In einer weiteren vorteilhaften Ausführungsform weist die Freilaufeinrichtung eine Kugel auf, die in einer Blockierstellung der Blockiereinrichtung in einer ersten Richtung entlang einer umlaufenden Führungsnut des Übertragungselementes abgerollt werden kann. In einer zur ersten Richtung entgegengesetzt zweiten Richtung ist die Kugel dagegen abbremsbar beziehungsweise festklemmbar an der Blockiereinrichtung angeordnet. Durch diesen Aufbau kann eine sichere Funktionsweise der Freilaufeinrichtung gewährleistet werden, die auch in der Blockierstellung eine Drehbewegung des Übertragungselementes in Beaufschlagungsrichtung ermöglicht bis das Betätigungselement in die gewünschte Stellung verbracht ist. Eine daraufhin erfolgende Drehbewegung des Übertragungselementes entgegen der Beaufschlagungsrichtung wird dagegen blockiert, um das Betätigungselement in der eingenommenen Stellung zu halten.

Dabei ist es in jedem Fall günstig, wenn die Schwungmasse als Teil eines redundanten Notstellantriebes ausgebildet ist, mittels dem der Stellmechanismus zusätzlich zu einem Standardantrieb angetrieben werden kann. Auf diese Weise kann die Aktuatorvorrichtung im normalen Betrieb beispielsweise über einen Stellmotor aktiviert werden, um das Betätigungselement zwischen der Beaufschlagungsstellung und der Freigabestellung wiederkehrend hin- und her zu verlagern. Parallel hierzu wird dabei die Schwungmasse permanent angetrieben. Beispielsweise bei einer Störung des Standardantriebes kann dann die Bewegungsenergie der Schwungmasse verwendet werden, um den Stellmechanismus beziehungsweise das Betätigungselement in eine vorbestimmte Stellung zu verbringen, die insbesondere einer Notausstellung entspricht.

Alternativ hierzu kann die Schwungmasse auch selbst als Teil eines regulären Antriebes ausgebildet sein, über den der normale Betrieb der Aktuatorvorrichtung erfolgt. Auf einen üblichen Standardantrieb, beispielsweise in Form eines Stellmotors, kann dabei verzichtet werden. In diesem Fall ist eine besonders kompakte Ausbildung der Aktuatorvorrichtung möglich. Zudem können auf diese Weise die Betriebskosten der Aktuatorvorrichtung erheblich reduziert werden, da die für die Aufrechterhaltung der benötigten Rotationsgeschwindigkeit der Schwungmasse erforderliche Energie lediglich einen Bruchteil der Energie beträgt, die im Falle eines Direktantriebes mit einem üblichen Stellmotor benötigt wird.

In den Figuren ist eine beispielhafte Ausführungsform der Erfindung dargestellt. Es zeigen:
- Figur 1: eine Seitenansicht einer erfindungsgemäßen Aktuatorvorrichtung zur Betätigung eines Fußpedals,
- Figur 2: eine geschnittene Ansicht der Aktuatorvorrichtung,
- Figur 3: einen vergrößerten Schnitt durch ein Zahnradgetriebe der Aktuatorvorrichtung nach Figur 1,
- Figur 4: eine geschnittene Ansicht des Zahnradgetriebe nach Figur 3,
- Figur 5: eine Draufsicht auf die Aktuatorvorrichtung in einer Blockierstellung und
- Figur 6: eine vergrößerte Ansicht einer Blockiereinrichtung der Aktuatorvorrichtung nach Figur 5.

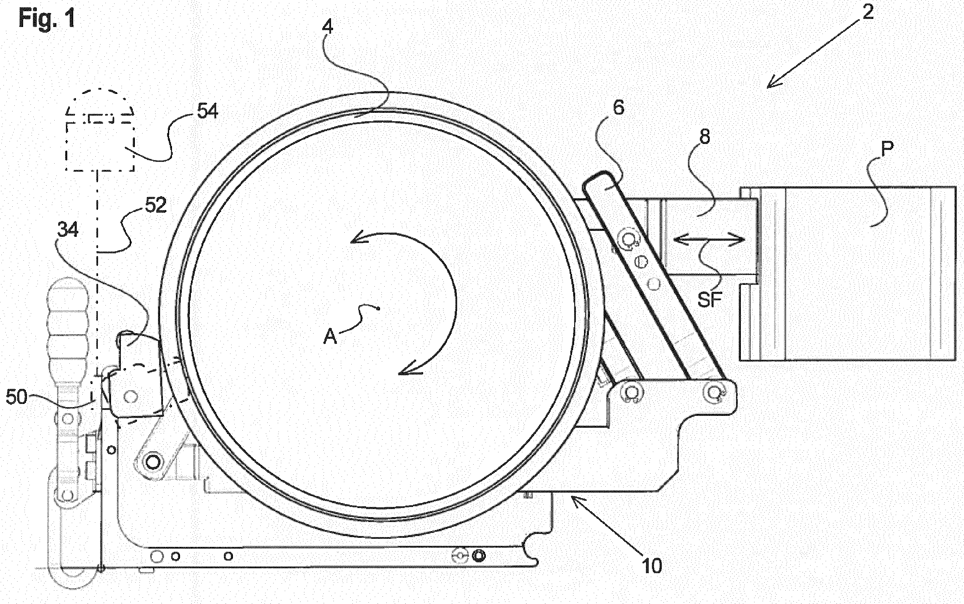

Fig. 1 zeigt eine Aktuatorvorrichtung 2 mit einem Betätigungselement 8, das über einen Stellmechanismus 10 mit einer Stellkraft SF beaufschlagt werden kann. Hierdurch kann das Betätigungselement 8 zwischen einer Beaufschlagungsstellung und einer Freigabestellung verlagert werden, in der ein Fußpedal P eines Kraftfahrzeuges beaufschlagt beziehungsweise freigegeben wird. Hierzu weist der Stellmechanismus 10 ein um eine Achse A verdrehbares im Wesentlichen radförmiges Übertragungselement 4 auf, das in nicht näher dargestellter Weise über ein Gestänge 6 mit dem Betätigungselement 8 bewegungsgekoppelt ist.

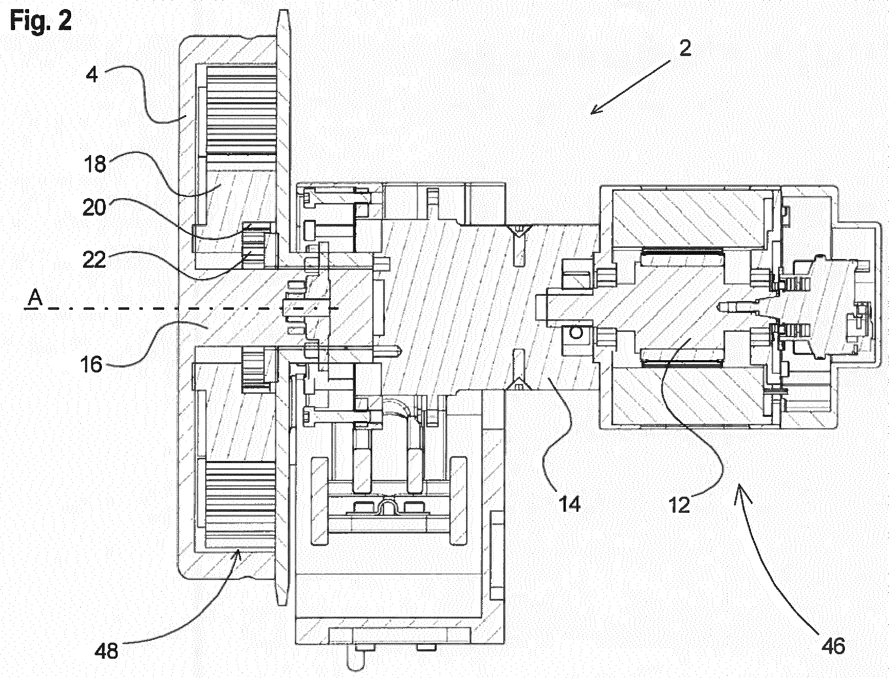

Wie insbesondere aus Fig. 2 zu entnehmen ist, kann der Stellmechanismus 10 im normalen Betrieb der Aktuatorvorrichtung, wie beispielsweise auf einem Teststand oder bei ferngesteuertem Betrieb des Kraftfahrzeuges, von einem Motor 12 betätigt werden. Dieser ist über eine Welle 14 mit einem Achselement 16 des Übertragungselementes 4 drehfest verbunden. Um das Achselement 16 herum ist dabei ein ringförmiges Schwungrad 18 vorgesehen, das eine Schwungmasse bildet, die ebenfalls um die Achse A herum verdrehbar ist. Hierzu ist das Schwungrad 18 beispielhaft einteilig mit einem Rotor 20 ausgeformt, der durch einen innenliegenden Stator 22 angetrieben werden kann.

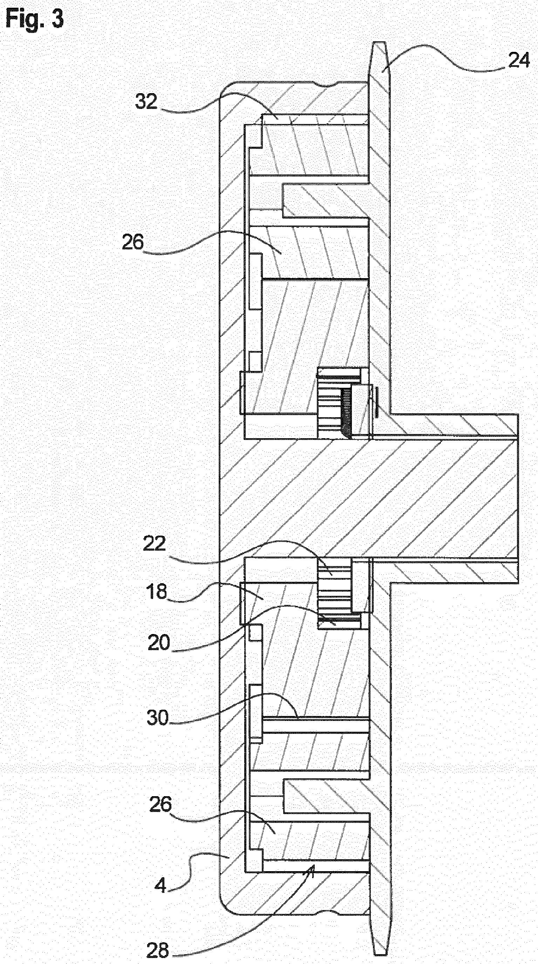

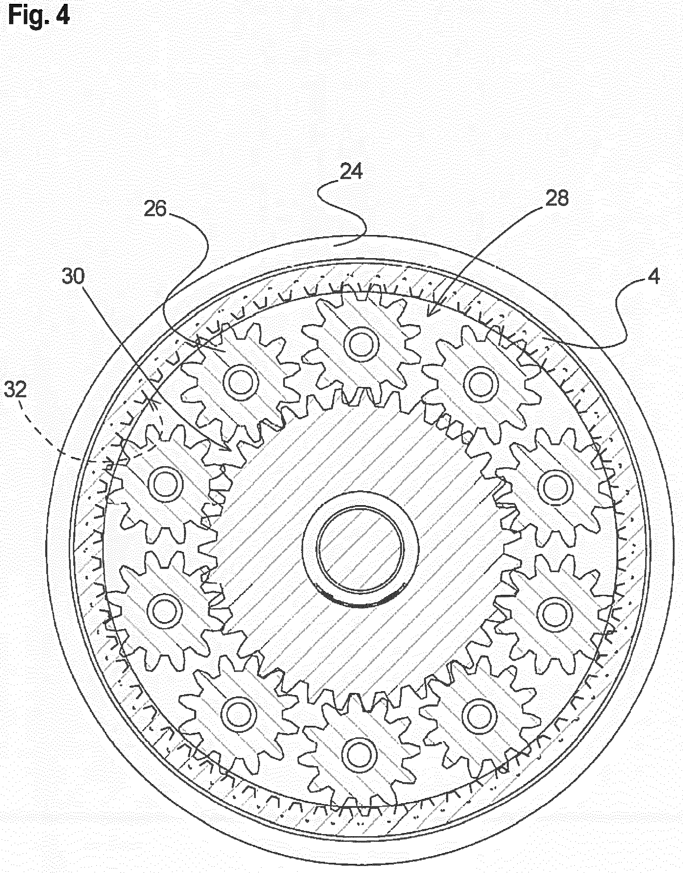

Nach außen bildet das Schwungrad 18 zusammen mit mehreren an einem Planetenträger 24 gehaltenen Planetenrädern 26 und mit dem Übertragungselement 4 ein Planetengetriebe 28 aus, wie es insbesondere aus den Figuren 3 und 4 zu entnehmen ist. Das Schwungrad 18 weist hierzu an seiner Außenseite eine Außenverzahnung 30 auf, die mit den Planetenrädern 26 kämmt. Ferner weist das Übertragungselement 4 an seiner Innenseite eine Innenverzahnung 32 auf, die ebenfalls mit den Planetenrädern 26 kämmt. Die Planetenräder 26 selbst sind wiederum frei verdrehbar an dem Planetenträger 24 gehalten.

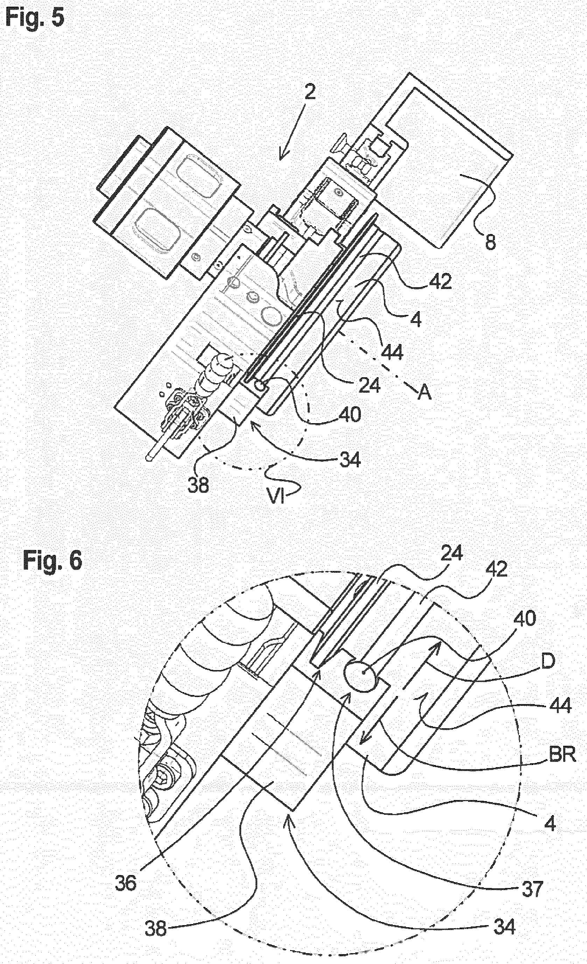

Wie aus den Figuren 5 und 6 zu entnehmen ist, weist die Aktuatorvorrichtung 2 eine Blockiereinrichtung 34 auf, mittels der eine Drehbewegung des Planetenträgers 24 um die Achse A blockiert werden kann. Hierzu ist die Blockiereinrichtung 34 gegenüber dem Planetenträger 24 verschwenkbar gehalten und weist eine Klemmaufnahme 36 auf, die in einer in den Figuren 5 und 6 dargestellten Blockierstellung an einem Außenrand des Planetenträgers 24 festgeklemmt werden kann.

Ferner ist an der Blockiereinrichtung 34 eine Freilaufeinrichtung 37 vorgesehen, mittels der das Übertragungselement 4 entlang einer Drehrichtung D, die einer Beaufschlagungsrichtung BR entgegen gerichtet ist, blockiert werden kann. Hierzu weist die Freilaufeinrichtung 36 eine an einem Gehäuse 38 der Blockiereinrichtung 34 verdrehbar gehaltene Kugel 40 auf, die in der Blockierstellung der Blockiereinrichtung 34 an einer in eine Außenfläche 44 des Übertragungselementes 4 eingelassenen Führungsnut 42 anliegt. In dieser Position kann die Kugel 40 in der Blockierstellung entlang der Führungsnut 42 abrollen, solange das Übertragungselement 4 entlang der Beaufschlagungsrichtung BR verdreht wird. Sobald sich die Drehrichtung D des Übertragungselementes 4 dagegen umgekehrt, wird ein Verdrehen der Kugel 40 durch das Gehäuse 38 und damit auch ein Verdrehen des Übertragungselementes 4 entgegen der Beaufschlagungsrichtung BR blockiert.

Im Betrieb der Aktuatorvorrichtung 2 nach den Figuren 1 bis 6 dient der Motor 12 als Standardantrieb 46 des Stellmechanismus 10, mittels dem das Fußpedal P wiederkehrend durch Beaufschlagung des Betätigungselementes 8 mit der Stellkraft SF zwischen der Beaufschlagungsstellung und der Freigabestellung verlagert werden kann. Hierzu wird der Motor 12 in die jeweils gewünschte Richtung verdreht, wobei das hierbei erzeugte Drehmoment über die Welle 14 und das Achselement 16 auf das Übertragungselement 4 übertragen wird. Von diesem erfolgt dann die Kraftübertragung über das Gestänge 6 auf das Betätigungselement 8, das hierdurch von der Ausschlagungsstellung in die Freigabestellung verlagert wird oder umgekehrt. Hierdurch ist beispielsweise ein ferngesteuerter oder automatisierter Betrieb der Aktuatorvorrichtung 2, wie beispielsweise während eines Fahrtests oder auf einem Teststand möglich.

Das durch den Rotor 20 angetriebene Schwungrad 18 fungiert dabei zusammen mit dem restlichen Planetengetriebe 28 als zusätzlicher redundanter Notstellantrieb 48. Im Betrieb der Aktuatorvorrichtung 2 wird hierzu der Rotor 20 des Schwungrades 18 unabhängig vom Motor 12 permanent über den Stator 22 angetrieben beziehungsweise in Bewegung gehalten. Die mit der Außenverzahnung 30 kämmenden Planetenräder 26 rollen dabei unter Drehbewegung des Planetenträgers 24 um die Achse A herum an der Innenverzahnung 32 des Übertragungselementes 4 ab.

Im Falle, dass nun das Betätigungselement 8 nicht über den Standardantrieb 46 betätigt werden kann, beispielsweise weil dieser defekt ist oder dem Motor 12 keine ausreichende Antriebsenergie zur Verfügung steht, so kann die Energie des sich drehenden Schwungrades 18 zur Beaufschlagung des Stellmechanismus 10 verwendet werden.

Hierzu wird die Blockiereinrichtung 34 aus der in Figur 1 dargestellten Freigabestellung mittels einer Aktivierungseinrichtung 50, die beispielsweise über eine Leitung 52 oder über Funk mit einer Auslösevorrichtung 54 verbunden ist und über diese ausgelöst werden kann, in die mit strichpunktierten Linien dargestellten Blockierstellung verlagert beziehungsweise verschwenkt, die einer Notausstellung entspricht. Die Auslösevorrichtung 54 kann dabei beispielsweise wie dargestellt durch eine Notaushandhabe gebildet sein.

In dieser Blockierstellung wird der Planetenträger 24 in der Klemmaufnahme 36 festgeklemmt, wodurch auch die Drehbewegung der Planetenräder 26 um die Achse A herum ruckartig blockiert wird. Hierdurch wird nun das Drehmoment des Schwungrades 18 impulsartig über die Außenverzahnung 30 auf die Planetenräder 26 übertragen, die nun wiederum über die Innenverzahnung 32 das Übertragungselement 4 mit einem impulsartigen Drehmoment beaufschlagen. Diese über das Schwungrad 18 generierte Kraftbeaufschlagung des Übertragungselementes 4 wird dabei über das Gestänge 6 als, Stellkraft SF an das Betätigungselement 8 weiter gegeben, das wiederum das betreffende Fußpedal P in die jeweilige Notausstellung verbringt.

Die Freüaufeinrichtung 37 ermöglicht dabei auch in der Blockierstellung der Blockiereinrichtung 34 eine fortdauernde Drehbewegung des Übertragungselementes 4 in Beaufschlagungsrichtung BR. Sobald jedoch durch Rückstellkräfte des Fußpedals P beziehungsweise des Stellmechanismus 10 eine entgegen gesetzte Drehbewegung am Übertragungselement 4 generiert wird, wird die Kugel 40 der Freilaufeinrichtung 37 am Gehäuse 38 festgeklemmt und das Übertragungselement 4 zusammen mit dem Stellmechanismus 10 und dem Betätigungselement 8 in Position gehalten, um die Notausstellung beizubehalten.

Alternativ zu der dargestellten Ausführungsform der Aktuatorvorrichtung 2, bei dem der Motor 12 als Standardantrieb 46 und das durch den Rotor 20 angetriebene Schwungrad 18 lediglich als Notstellantrieb 48 fungiert, ist es auch möglich, das Schwungrad 18 in Verbindung mit dem restlichen Planetengetriebe 28 als regulären Antrieb für einen normalen Betrieb der Aktuatorvorrichtung 2 zu verwenden.

Eine solche Verwendung ist dabei beispielsweise für Prüfstände geeignet, an denen die Lebensdauer von Fußpedalen P durch deren wiederkehrende Beaufschlagung mit einer vordefinierten Prüfkraft geprüft wird. Hierbei stehen für den Aufbau der benötigten Rotationsenergie mehrere Sekunden zur Verfügung, während der Kraftabruf lediglich für Sekundenbruchteile erfolgen muss. Der Leistungsbedarf des in diesem Fall als Standardantrieb dienenden Schwungrades 18 in Verbindung mit dem Planetengetriebe 28 beträgt dabei lediglich einen Bruchteil des Energiebedarfs eines herkömmlichen Antriebes, wie beispielsweise eines üblichen Stellmotors. Auf diese Weise können die Betriebskosten der Aktuatorvorrichtung 2 erheblich reduziert werden. Zudem kann die Aktuatorvorrichtung 2 auf diese Weise besonders kompakt ausgeführt werden, da auf den durch den Motor 12 gebildeten Standardantrieb 46 gemäß Fig. 2 komplett verzichtet werden kann.

## Patentansprüche

1. Aktuatorvorrichtung (2) zur Betätigung wenigstens eines Fußpedals (P) eines Kraftfahrzeugs
mit wenigstens einem Betätigungselement (8), das zur Beaufschlagung des Fußpedals (P) mittels eines Stellmechanismus (10) zwischen einer Beaufschlagungsstellung und einer Freigabestellung verlagerbar ist,
**dadurch gekennzeichnet, dass** der Stellmechanismus (10) mittels einer Schwungmasse mit einer Stellkraft (SF) antreibbar ist.

2. Aktuatorvorrichtung nach Anspruch 1, **dadurch gekennzeichnet, dass** die Schwungmasse durch ein um eine Achse (A) herum antreibbares Schwungrad (18) gebildet ist.

3. Aktuatorvorrichtung nach Anspruch 2, **dadurch gekennzeichnet, dass** das Schwungrad (18) einen Rotor (20) bildet/aufweist, der durch einen innen liegenden Stator (22) antreibbar ist.

4. Aktuatorvorrichtung nach Anspruch 2 oder 3, **dadurch gekennzeichnet, dass** das Schwungrad (18) über ein Zahnradgetriebe mit einem Übertragungselement (4) koppelbar ist.

5. Aktuatorvorrichtung nach Anspruch 4, **dadurch gekennzeichnet, dass** das Zahnradgetriebe durch ein Planetengetriebe (28) mit mehreren Planetenrädern (26) gebildet ist, die nach innen mit dem Schwungrad (18) und nach außen mit dem Übertragungselement (4) kämmen.

6. Aktuatorvorrichtung nach Anspruch 5, **dadurch gekennzeichnet, dass** die Planetenräder (26) an einem Planetenträger (24) gehalten sind, der mittels einer Blockiereinrichtung (34) entlang einer Drehrichtung (D) blockierbar ist.

7. Aktuatorvorrichtung nach Anspruch 6, **dadurch gekennzeichnet, dass** eine Freilaufeinrichtung (37) vorgesehen ist, mittels der das Übertragungselement (4) entgegen einer Beaufschlagungsrichtung (BR) blockierbar ist.

8. Aktuatorvorrichtung nach Anspruch 6 und 7, **dadurch gekennzeichnet, dass** die Blockiereinrichtung (34) und die Freilaufeinrichtung (37) gemeinsam betätigbar sind.

9. Aktuatorvorrichtung nach Anspruch 7 oder 8, **dadurch gekennzeichnet, dass** die Freilaufeinrichtung (37) eine Kugel (40) aufweist, die in einer Blockierstellung der Blockiereinrichtung (34) in einer ersten Richtung entlang einer umlaufenden Führungsnut (42) des Übertragungselementes (4) abrollbar und in einer entgegen gesetzten zweiten Richtung festlegbar ist.

10. Aktuatorvorrichtung nach einem der Ansprüche 1 bis 9, **dadurch gekennzeichnet, dass** die Schwungmasse als Teil eines redundanten Notstellantriebes (48) fungiert, mittels dem der Stellmechanismus (10) zusätzlich zu einem Standardantrieb (46) antreibbar ist.

11. Aktuatorvorrichtung nach Anspruch 10, **dadurch gekennzeichnet, dass** die Aktuatorvorrichtung (2) über den redundanten Notstellantrieb (48) in eine Notausstellung verbringbar ist.

12. Aktuatorvorrichtung nach einem der Ansprüche 1 bis 9, **dadurch gekennzeichnet, dass** die Schwungmasse als Teil eines regulären Antriebes fungiert.
